# EUROPEAN PATENT SPECIFICATION

(11) **EP 2 793 193 B1**
(45) Date of publication and mention of the grant of the patent: **27.03.2019**
(21) Application number: 11877396.9
(22) Date of filing: 15.12.2011
(51) Int. Cl.: G06T 19/00

(54) **DISPLAY DEVICE AND DISPLAY METHOD**
ANZEIGEVORRICHTUNG UND ANZEIGEVERFAHREN
DISPOSITIF D'AFFICHAGE ET PROCÉDÉ D'AFFICHAGE

(43) Date of publication of application: 22.10.2014
(73) Proprietor: Pioneer Corporation, Tokyo 113-0021 (JP)
(72) Inventor: FUJIE, Tetsuya, Kawagoe-shi Saitama 350-8555 (JP)
(74) Representative: Gill Jennings & Every LLP
(86) International application number: PCT/JP2011/079083
(87) International publication number: WO 2013/088557

(56) References cited:
- DE-A1-102004 060 380
- JP-A- 2005 106 651
- JP-A- 2006 162 442
- JP-A- 2010 066 042
- JP-A- 2010 234 959
- JP-A- 2011 218 891
- US-A1- 2008 195 315

## Description

### TECHNICAL FIELD

The present invention relates to a technology for displaying information.

### BACKGROUND TECHNIQUE

Conventionally, regarding a navigation device, there is proposed a technique for displaying information on a nearby facility over a map image without superposing the information on any road in the map image. For example, Patent Reference-1 discloses a technique for making map data so that landmarks do not overlap with any road in the map data. The Patent Reference-2 discloses the preamble of claim 1.

Patent Reference-1: Japanese Patent Application Laid-open under No. 2001-307121
Patent Reference-2: DE 10 2004 060380 A1

### DISCLOSURE OF INVENTION

### PROBLEM TO BE SOLVED BY THE INVENTION

In recent years, there is proposed a technique relating to AR (Augmented Reality) for displaying guide information and information on driving operation over the front scenery of a moving body by using a display device such as a head-up display. In case of such an AR display, it is preferable to display information on a nearby facility without superposing it on any road.

The above is an example of the problem to be solved by the present invention. An object of the present invention is to provide a display device and a display method thereof capable of appropriately displaying information on an object contained in the front scenery of the moving body without superposing it on any road.

### MEANS FOR SOLVING THE PROBLEM

One invention is a display device according to the subject-matter of claim 1.

Another invention is a display method executed by a display device, according to the subject-matter of claim 7.

### BRIEF DESCRIPTION OF THE DRAWINGS

FIG. 1 illustrates an example of the configuration of a system according to an embodiment.
FIG. 2 illustrates the schematic configuration of a navigation device.
FIG. 3 illustrates the schematic configuration of a head-up display.
FIG. 4 illustrates the schematic configuration of a control unit in a light source unit.
FIG. 5 illustrates an example corresponding to a case that information to be displayed outside a roadway is actually displayed inside the roadway.
FIGS. 6A to 6C are drawings for explaining concrete examples of an outside roadway drawing process.
FIG. 7 is a flowchart indicating an example of a display control method according to the embodiment.

### DETAILED DESCRIPTION OF THE PREFERRED EMBODIMENTS

According to a preferable embodiment of the present invention, there is provided a display device including: a present position information obtaining unit configured to obtain present position information of a moving body; and a display control unit configured to display information on an object through a transparent member based on the present position information, the object being contained in scenery in traveling direction of the moving body, the transparent member being positioned between a viewpoint of a traveler in the moving body and the scenery, wherein the display control unit changes a display position of the information on the object to an outward direction of a road in a case that the display position of the information on the object based on the present position information is inside the road by at least a predetermined criterion distance, the road being contained in the scenery seen through the transparent member.

Preferably, the display device is used for displaying information on an object contained in scenery through a transparent member based on the present position information of a moving body. The above-mentioned transparent member is positioned between a viewpoint of a traveler in the moving body and the scenery in the traveling direction of the moving body. Concretely, the display control unit in the display device changes a display position of the information on the object to an outward direction of a road in a case that the display position of the information on the object based on the present position information is inside the road by at least a predetermined criterion distance, wherein the road is contained in the scenery seen through the transparent member. In other words, the display control unit adjusts the display position of the information on the object to a position outside the range of the road when the display position of the information on the object is positioned within the range of the road. Thereby, it is possible to properly display the information on the object contained in the scenery in front of the moving body without superposing it on the road. For example, it is possible to display information which is not supposed to be displayed inside the road properly on a position outside the road thereby to prevent the traveler from having misunderstandings.

In one mode of the display device, the display device further includes an object information obtaining unit configured to obtain category information on a category of the object, and the display control unit determines whether or not to change the display position of the information on the object based on the category information. Thereby, it is possible to display the information on the object inside or outside the road depending on the category of the object. Thus, it is possible to properly arrange the display information in the display range while letting the traveler easily recognize the category of the display information.

In another mode of the display device, the display control unit decides to change the display position of the information on the object to the outward direction of the road in a case that the category of the object according to the category information is relevant to a facility, and decides not to change the display position of the information on the object to the outward direction of the road in a case that the category of the object according to the category information is relevant to a road sign. Thereby, it is possible to display information on a facility outside the road while displaying information on a road sign inside the road.

In still another mode of the display device, the display control unit changes the display position of the information on the object to the outward direction of the road in a case that the object is a facility existing outside the road, and does not change the display position of the information on the object to the outward direction of the road in a case that the object is a facility existing inside the road. Thereby, it is possible to properly display information on a facility existing inside the road in accordance with the actual position of the facility.

According to another preferable embodiment of the present invention, there is provided a display method executed by a display device, including: a present position information obtaining process for obtaining present position information of a moving body; and a display control process for displaying information on an object through a transparent member based on the present position information, the object being contained in scenery in traveling direction of the moving body, the transparent member being positioned between a viewpoint of a traveler in the moving body and the scenery, wherein in the display control process, a display position of the information on the object is changed to an outward direction of a road in a case that the display position of the information on the object based on the present position information is inside the road by at least a predetermined criterion distance, the road being contained in the scenery seen through the transparent member.

According to still another preferable embodiment of the present invention, there is provided a display device including: a present position information obtaining unit configured to obtain present position information of a moving body; and an image obtaining unit configured to obtain an actual image of a travelling direction of the moving body; and a display control unit configured to display information on an object contained in the actual image on the actual image based on the present position information, wherein the display control unit changes a display position of the information on the object to an outward direction of a road contained in the actual image in a case that the display position of the information on the object based on the present position information is inside the road by at least a predetermined criterion distance.

According to still another preferable embodiment of the present invention, there is provided a display device including: a display unit configured to let a traveler in a moving body visually recognize scenery in front of the moving body and information on an object contained in the scenery and a display control unit configured to change a display position of the information on the object to an outward direction of a road contained in the scenery in order to prevent the display position of the information on the object from being a position inside the road by at least a predetermined criterion distance.

Preferably, the display device further includes a present position information obtaining unit configured to obtain present position information of the moving body, and the display control unit changes a display position of the information on the object to an outward direction of a road in a case that the display position of the information on the object based on the present position information is inside the road by at least a predetermined criterion distance, the road being contained in the scenery seen through the display unit.

According to still another preferable embodiment of the present invention, there is provided a display device including: a present position information obtaining unit configured to obtain present position information of a moving body; and a display control unit configured to display information on an object through a transparent member based on the present position information, the object being contained in scenery in traveling direction of the moving body, the scenery being seen through the transparent member, wherein the display control unit changes a display position of the information on the object to an outward direction of a road in a case that the display position of the information on the object based on the present position information is inside the road by at least a predetermined criterion distance, the road being contained in the scenery seen through the transparent member.

### EMBODIMENT

Now, a preferred embodiment of the present invention will be described below with reference to the attached drawings.

### [System Configuration]

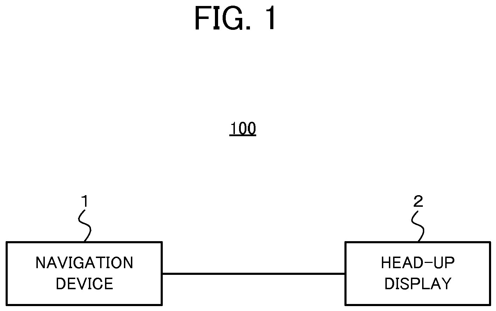

FIG. 1 illustrates an example of the configuration of a system according to the embodiment. As illustrated in FIG. 1, the system includes a navigation device 1 and a head-up display 2. The system is mounted on a vehicle.

The navigation device 1 has a guide function of a route from a departure place to a destination. Examples of the navigation device 1 include a stationary navigation device set in a vehicle, a PND (Portable Navigation Device) and a cell phone such as a smart phone.

The head-up display 2 generates an image indicating information for assisting the driving operation such as map information indicating the present position, route guide information and a running speed, and lets the driver visually recognize the image as a virtual image from the position of the eye (eye point) of the driver. The navigation device 1 supplies the head-up display 2 with various kinds of information used for the navigation processing such as the position of the vehicle, the running speed of the vehicle, map information and facility data. The head-up display 2 is an example of "the display unit" in the present invention.

It is noted that the navigation device 1 may be held by a cradle if the navigation device 1 is a cell phone such as a smart phone. In this case, the navigation device 1 may exchange the information with the head-up display 2 via the cradle.

### [Configuration of Navigation Device]

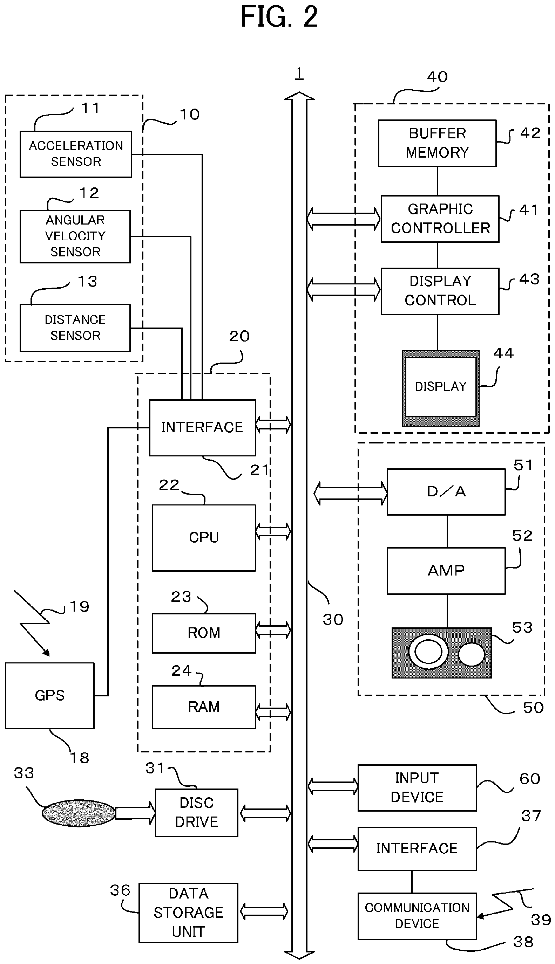

FIG. 2 shows the configuration of the navigation device 1. As shown in FIG. 2, the navigation device 1 includes a stand-alone position measurement device 10, a GPS receiver 18, a system controller 20, a disc drive 31, a data storage unit 36, a communication interface 37, a communication device 38, a display unit 40, a sound output unit 50, and an input device 60.

The stand-alone position measurement device 10 includes an acceleration sensor 11, an angular velocity sensor 12 and a distance sensor 13. The acceleration sensor 11 includes a piezoelectric element, for example, and detects the acceleration degree of the vehicle and outputs the acceleration data. The angular velocity sensor 12 includes a vibration gyroscope, for example, and detects the angular velocity of the vehicle at the time of changing the direction of the vehicle and outputs the angular velocity data and the relative direction data. The distance sensor 13 measures vehicle speed pulses including a pulse signal generated with the wheel rotation of the vehicle.

The GPS receiver 18 receives an electric wave 19 for transmitting downlink data including position measurement data from plural GPS satellites . The position measurement data is used for detecting the absolute position (hereinafter referred to as "present position" or "own position") of the vehicle from longitude and latitude information.

The system controller 20 includes an interface 21, a CPU (Center Processing Unit) 22, a ROM (Read Only Memory) 23 and a RAM (Random Access Memory) 24, and is configured to control the entire navigation device 1.

The interface 21 executes the interface operation with the acceleration sensor 11, the angular velocity sensor 12, the distance sensor 13 and the GPS receiver 18. Then, the interface 21 inputs the vehicle speed pulse, the acceleration data, the relative direction data, the angular velocity data, the GPS measurement data and the absolute direction data into the system controller 20. The CPU 22 controls the entire system controller 20. The ROM 23 includes a non-volatile memory (not shown) in which a control program for controlling the system controller 20 is stored. The RAM 24 readably stores various kinds of data such as route data preset by the user via the input device 60, and supplies a working area to the CPU 22.

The system controller 20, the disc drive 31 such as a CD-ROM drive or a DVD-ROM drive, the data storage unit 36, the communication interface 37, the display unit 40, the sound output unit 50 and the input device 60 are connected to each other via a bus line 30.

Under the control of the system controller 20, the disc drive 31 reads contents data such as sound data and video data from a disc 33 such as a CD and a DVD to output the contents data. The disc drive 31 may be the CD-ROM drive or the DVD-ROM drive, or may be a drive compatible between the CD and the DVD. The data storage unit 36 includes a HDD, for example, and stores various kinds of data used for a navigation process such as map data. The communication device 38 includes an FM tuner or a beacon receiver, a mobile phone and a dedicated communication card for example, and obtains information (hereinafter referred to as "VICS information"; "VICS" is a registered trademark) delivered from a VICS (Vehicle Information Communication System) center by the electric wave 39. The communication interface 37 executes the interface operation of the communication device 38 to input the VICS information into the system controller 20. The communication device 38 sends information on the present position obtained from the GPS receiver 18 to the head-up display 2.

The display unit 40 displays various kinds of display data on a display screen of a display 44 under the control of the system controller 20. Concretely, the system controller 20 reads the map data from the data storage unit 36, and the display unit 40 displays, on its display screen, the map data read from the data storage unit 36 by the system controller 20. The display unit 40 includes a graphic controller 41 for controlling the entire display unit 40 on the basis of the control data transmitted from the CPU 22 via the bus line 30, a buffer memory 42 having a memory such as a VRAM (Video RAM) for temporarily storing immediately displayable image information, a display control unit 43 for controlling a display 44 such as a liquid crystal and a CRT (Cathode Ray Tube) on the basis of the image data outputted from the graphic controller 41, and the display 44. The display 44 is formed by a liquid crystal display device of the opposite angle 5-10 inches, and is mounted in the vicinity of a front panel of the vehicle.

The sound output unit 50 includes a D/A converter 51 for executing D/A (Digital to Analog) conversion of the sound digital data transmitted from the CD-ROM drive 31, a DVD-ROM 32 or the RAM 24 via the bus line 30 under the control of the system controller 20, an amplifier (AMP) 52 for amplifying a sound analog signal outputted from the D/A converter 51, and a speaker 53 for converting the amplified sound analog signal into the sound and outputting it to the vehicle compartment.

The input device 60 includes keys, switches, buttons, a remote controller and a sound input device, which are used for inputting various kinds of commands and data. The input device 60 is arranged in the vicinity of the display 44 and a front panel of a main body of an on-vehicle electric system loaded on the vehicle . Additionally, in such a case that the display 44 is in a touch panel system, a touch panel provided on the display screen of the display 44 also functions as the input device 60.

### [Configuration of Head-up Display]

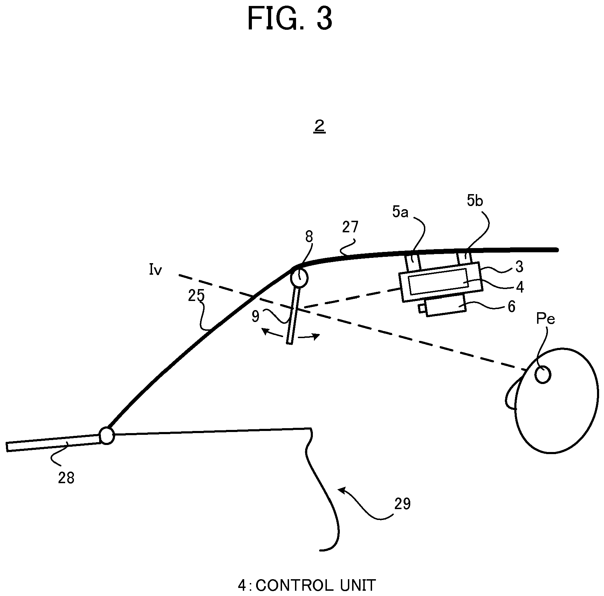

FIG. 3 illustrates the schematic configuration of the head-up display 2. As illustrated in FIG. 3, the head-up display 2 according to the embodiment includes a light source unit 3, a camera 6 and a combiner 9, and is installed in a vehicle having a front window 25, a ceiling board 27, a hood 28 and a dashboard 29.

The light source unit 3 is provided on the ceiling board 27 in the vehicle interior through the support parts 5a and 5b, and emits the light for displaying an image illustrating driver assist information towards the combiner 9. In particular, under the control of the control unit 4, the light source unit 3 generates an original image (real image) of the display image in the light source unit 3, and emits the light for displaying the image towards the combiner 9 thereby to let the driver visually recognize the virtual image "Iv" via the combiner 9. For example, the light source unit 3 has a display unit such as a laser light source and a LCD light source, and emits the light by means of such a display unit.

The display image emitted from the light source unit 3 is projected onto the combiner 9, and the combiner 9 shows the display image as the virtual image Iv by reflecting the display image towards the eye point "Pe" of the driver. The combiner 9 has a support shaft 8 provided on the ceiling board 27 and rotates on the support shaft 8. The support shaft 8 is provided on the ceiling board 27 near the top edge of the front window 25, i.e., near the position of a sun visor (not shown) for the driver. It is noted that the support shaft 8 may be provided in place of the above-mentioned sun visor. The combiner 9 is an example of "the transparent member" and "the display unit" in the present invention.

The control unit 4 includes a CPU, a RAM and a ROM which are not shown, and controls the entire head-up display 2. The control unit 4 is capable of communicating with the navigation device 1 and receives various kinds of information used for the navigation processing from the navigation device 1. In particular, according to the embodiment, the control unit 4 receives present position information indicating the own position and information for display from the navigation device 1, and thereby performs the control of displaying the information while superposing the information on the scenery seen through the combiner 9. Namely, the control unit 4 performs a control for the AR display. Concretely, the control unit 4 receives information on an object existing in the scenery seen through the combiner 9 and performs such a control that the virtual image corresponding to the information on the object is seen overlapping with the object in the scenery. The control unit 4 is an example of "the present position information obtaining unit", "display control unit" and "object information obtaining unit" according to the present invention.

The camera 6 captures the scenery in the travelling direction of the vehicle. Concretely, the camera 6 captures the scenery within the display range of the virtual image Iv. Then, the camera 6 supplies the captured image to the control unit 4 in the light source unit 3.

### [Configuration of Control Unit]

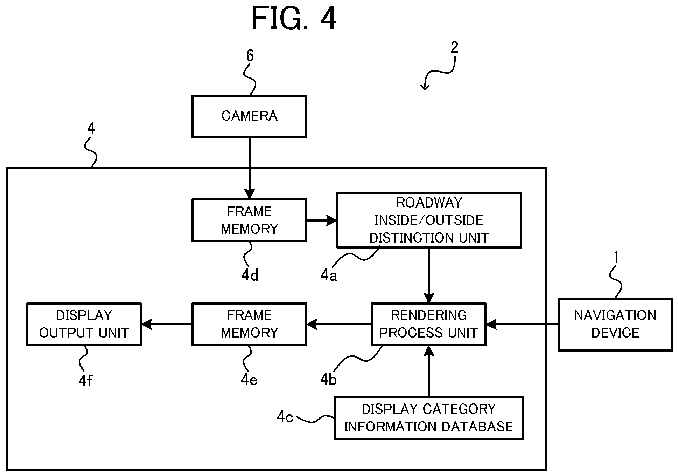

Next, with reference to FIG. 4, a description will be given of the configuration of the control unit 4 in the light source unit 3 in the head-up display 2. Hereinafter, an overview of the control performed by the control unit 4 will be described below.

As illustrated in FIG. 4, the control unit 4 includes a roadway inside/outside distinction unit 4a, a rendering process unit 4b, a display category information database 4c, frame memories 4d and 4e, and a display output unit 4f.

The frame memory 4d is supplied with the captured image from the camera 6, and stores the captured image. The captured image illustrates the scenery (i.e., scenery seen through the combiner 9 in the traveling direction of the vehicle) within the display range of the virtual image Iv. The captured image stored on the frame memory 4d is supplied to the roadway inside/outside distinction unit 4a.

The roadway inside/outside distinction unit 4a performs a process (hereinafter referred to as "roadway inside/outside distinction") for distinguishing between the range corresponding to the inside of a roadway in the captured image and the range corresponding to the outside of a roadway in the captured image by applying image processing to the captured image. Then, the roadway inside/outside distinction unit 4a supplies the rendering process unit 4b with information on the range corresponding to the inside of the roadway in the captured image and the range corresponding to the outside of the roadway in the captured image.

The term "inside of the roadway" herein indicates the range of the road where the own vehicle is running. In a case that the road where the own vehicle is running has a plurality of lanes, the term "inside of the roadway" indicates the range of the road including the plurality of lanes. On the other hand, the term "outside of the roadway" herein indicates the range outside the above-mentioned range of the road. In other words, the term indicates the range other than the road where the own vehicle is running. It is noted that the term "inside of the roadway" may include not only the road where the own vehicle is running but also the road corresponding to the oncoming lane(s).

The rendering process unit 4b receives information on the range corresponding to the inside of the roadway in the captured image and the range corresponding to the outside of the roadway in the captured image from the roadway inside/outside distinction unit 4a. The rendering process unit 4b also receives information on the present position of the vehicle (ownposition) and information to be displayed from the navigation device 1. Examples of the information to be displayed include navigation information, information on the driving operation and information on a nearby facility. Then, the rendering process unit 4b determines whether to display the target information inside the roadway or to display it outside the roadway. The rendering process unit 4b makes such a determination by referring to the display category information database 4c including information (hereinafter referred to as "display category information") which associates each kind of information to be displayed with information on whether to display the information inside the roadway or to display it outside the roadway. The display category information registered in the display category information database 4c is an example of "the category information on the category of the object" in the present invention.

The rendering process unit 4b generates an image whose display range overlaps with the range of the roadway when it determines, on the basis of the information on the range corresponding to the inside of the roadway and the range corresponding to the outside of the roadway supplied from the roadway inside/outside distinction unit 4a, that the information is to be displayed inside the roadway. In contrast, when the rendering process unit 4b determines that the information is to be displayed outside the roadway, it generates an image whose display position is outside the range of the roadway. Concretely, in order to realize the above-mentioned AR display, the rendering process unit 4b calculates the display position (hereinafter arbitrarily referred to as "first display position") of the target information based on the positional relationship between the position of the object corresponding to the target information to be displayed and the own position, and thereafter displays the target information on the first display position. In this case, when the first display position calculated as to the information determined to be displayed outside the roadway exists within the roadway, the renderingprocess unit 4b performs a process for changing the display position of the information to the outward direction, i.e., a process ("outside roadway drawing process") for drawing the information into a position outside the range of the roadway. Hereinafter, the display position after changing the first display position by the outside roadway drawing process is arbitrarily referred to as "second display position".

Thereafter, the rendering process unit 4b stores the image generated as mentioned above on the frame memory 4e. The image stored on the frame memory 4e is supplied to the display output unit 4f, and the display output unit 4f outputs the image stored on the frame memory 4e to the display unit.

### [Display Control Method]

Next, a description will be given of the display control method executed by the above-mentioned rendering process unit 4b in the control unit 4 according to the embodiment.

Basically, the rendering process unit 4b performs the control of superimposing and displaying the target information obtained from the navigation device 1 on the position corresponding to the information in the scenery seen through the combiner 9. Namely, the rendering process unit 4b performs the control for the AR display. As an approach to display the augmented reality, it can be considered to calculate the displayposition (first display position) of the information based on the positional relationship between the own position and the position of the object corresponding to the information to be displayed and thereafter to display the information on the position. However, merely according to this approach, the information could be displayed inside the roadway.

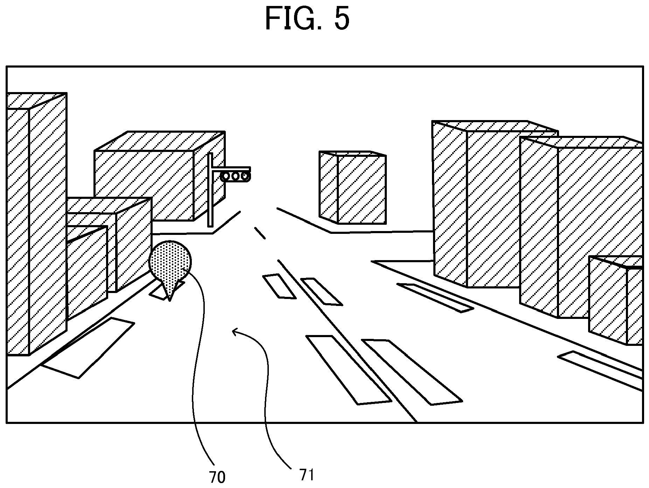

FIG. 5 illustrates an example corresponding to a case that information to be displayed outside the roadway is actually displayed inside the roadway. FIG. 5 illustrates an example of an image seen through the combiner 9 by the driver. Hereinafter, information on a POI (Point of Interest) corresponding to a nearby facility will be used as information to be displayed outside the roadway. The term "POI" herein indicates a facility or a place registered in the map data stored on the navigation device 1 or the head-up display 2, or the user-specified facility or the user-specified place specified out of them. Basically, the POI indicates a nearby facility existing near a road (i.e., outside the road), and is treated as information to be displayed outside the roadway.

According to the example illustrated in FIG. 5, on the roadway 71, there exists the mark indicating a POI as indicated by the symbol 70 and other display of information related to the POI (hereinafter, they are referred to as "POI display" or simply "POI".) . In this case, the display position of the POI 70 corresponds to the first display position calculated based on the positional relationship between the own position and the position of the facility corresponding to the POI 70. In this way, when the information to be displayed outside the roadway is actually displayed inside the roadway, it could cause misunderstandings to the driver and possibly too much information could be displayed inside the roadway.

According to the embodiment, in order to solve the above-mentioned problems, regarding the information to be displayed, the rendering process unit 4b determines whether to display it inside the roadway or to display it outside the roadway, and as for the information determined to be displayed outside the roadway, the rendering process unit 4b performs the control for displaying it within the range outside the roadway. In this case, when the information determined to be displayed outside the roadway is considered to be actually displayed inside the roadway, the rendering process unit 4b performs the process (i.e., outside roadway drawing process) for changing the display position of the information to the outward direction of the roadway. Concretely, in the case that the calculated first display position relating to the target information determined to be displayed outside the roadway is within the range corresponding to the inside of the roadway distinguished by the roadway inside/outside distinction unit 4a, the rendering process unit 4b performs the process for calculating the second display position obtained by shifting the first display position towards the outward direction of the roadway according to the outside roadway drawing process. In contrast, regarding the information determined to be displayed inside the roadway and the information which is to be displayed outside the roadway and actually displayed outside the roadway, the rendering process unit 4b displays the information at the first display position.

Here, on the basis of the category of the information to be displayed, the rendering process unit 4b determines whether to display the information inside the roadway or to display the information outside the roadway. Concretely, the rendering process unit 4b makes such a determination by referring to the display category information registered in the display category information database 4c. On the display category information database 4c, there is stored the display category information indicating whether to display the information inside the roadway or to display the information outside the roadway with respect to each kind of information targeted for display.

Examples of information to be displayed inside the roadway include information directly associated with the driving operation, information associated with the actual road, and information for enhancing the safety of the driver. Examples categorized into the information to be displayed inside the roadway include route guide information (lane information), information on traffic regulations and traffic rules, information for displaying a direction sign in close-up, and information on the destination. On the other hand, examples of information to be displayed outside the roadway include additional information such as information directly irrelevant to the driving operation and information directly irrelevant to the running road (i.e., roadway) . Examples categorized into the information to be displayed outside the roadway include a POI indicating a nearby facility.

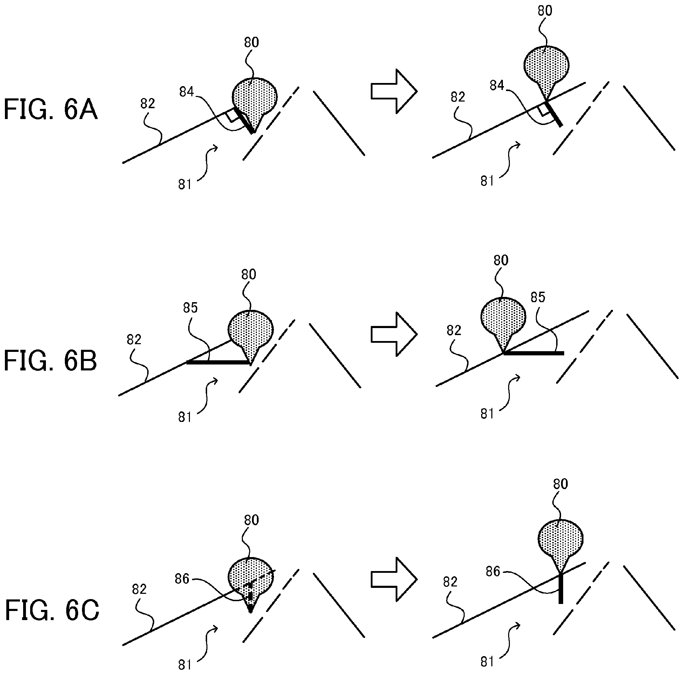

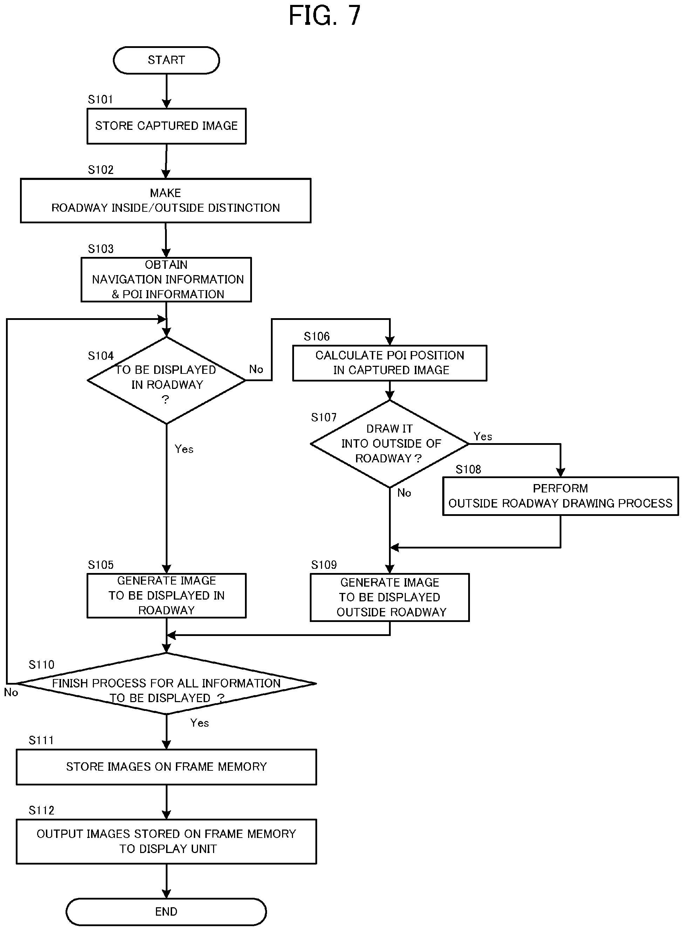

Next, with reference to FIGS. 6A to 6C and FIG. 7, a description will be given of concrete examples of the display control method according to the embodiment.

FIGS. 6A to 6C are drawings for explaining concrete examples of the outside roadway drawing process executed by the rendering process unit 4b. FIGS. 6A to 6C each indicates an example for calculating the second display position through the outside roadway drawing process in a case that the first display position of the POI 80 indicating a nearby facility is inside the roadway 81. In this case, the rendering process unit 4b firstly calculates the coordinates corresponding to the first display position of the POI 80 in the captured image and thereafter performs the above-mentioned outside roadway drawing process based on the coordinates and the range (range of coordinates) of the roadway 81 distinguished in the captured image by the roadway inside/outside distinction unit 4a.

Hereinafter, The term "first display position" indicates not only the first display position calculated as mentioned before but also the coordinates corresponding to the first display position in the captured image. The position of the bottom edge of the POI 80 is herein used as the first display position and the second display position.

FIG. 6A illustrates an example (hereinafter referred to as "first process") of the outside roadway drawing process. FIG. 6A illustrates the first display position of the POI 80 on the left side and the second display position of the POI 80 after the first process (i.e., the outside roadway drawing process) on the right side. In the first process, the rendering process unit 4b draws the vertical line 84 from the first display position of the POI 80 to the roadway line 82 that is vertical to the vertical line 84, and adopts the contact point between the vertical line 84 and the roadway line 82 as the second display position.

FIG. 6B illustrates another example (hereinafter referred to as "second process") of the outside roadway drawing process. FIG. 6B illustrates the first display position of the POI 80 on the left side and the second display position of the POI 80 after the second process (i.e., the outside roadway drawing process) on the right side. In the second process, the rendering process unit 4b draws the horizontal line 85 (i.e., a straight line parallel to the horizon in the captured image) from the first display position of the POI 80, and adopts the contact point between the horizontal line 85 and the roadway line 82 as the second display position.

FIG. 6C illustrates still another example (hereinafter referred to as "third process") of the outside roadway drawing process. FIG. 6C illustrates the first display position of the POI 80 on the left side and the second display position of the POI 80 after the third process (i.e., the outside roadway drawing process) on the right side. In the third process, the rendering process unit 4b draws the straight line 86 vertically extending from the first display position of the POI 80 towards the ground, and adopts the contact point between the straight line 86 and the roadway line 82 as the second display position. The left drawing in FIG. 6C indicates the straight line 86 by the dashed line since the straight line 86 overlaps with the POI 80.

FIG. 7 is a flowchart indicating an example of the display control method according to the embodiment. This flowchart is repeatedly executed by the control unit 4 in the head-up display 2.

Firstly, at step S101, the captured image captured by the camera 6 is stored on the frame memory 4d in the control unit 4. Then, the process goes to step S102.

At step S102, the roadway inside/outside distinction unit 4a in the control unit 4 makes the roadway inside/outside distinction by using the captured image. Namely, through image processing for the captured image, the roadway inside/outside distinction unit 4a distinguishes between the range corresponding to the inside of the roadway in the captured image and the range corresponding to the outside of the roadway in the captured image. Any known approach can be applied to the image processing executed herein. Then, process goes to step S103.

At step S103, the rendering process unit 4b in the control unit 4 obtains information to be displayed from the navigation device 1. For example, the rendering process unit 4b obtains navigation information in accordance with the own position and information (hereinafter simply referred to as "POI information") on POI indicating a facility in the vicinity of the own position. Then, the process goes to step S104.

At step S104, the rendering process unit 4b in the control unit 4 determines whether or not the information obtained at step S103 is information to be displayed inside the roadway. Concretely, the rendering process unit 4b makes such a determination by referring the display category information registered in the display category information database 4c. In this case, when the target information of the determination is categorized into information to be displayed inside the roadway according to the display category information, the rendering process unit 4b determines that the target information should be displayed inside the roadway. In contrast, when the target information of the determination is categorized into information to be displayed outside the roadway according to the display category information, the rendering process unit 4b determines that the information should not be displayed inside the roadway. For example, when the target information of the determination is POI information, the rendering process unit 4b determines that the information should not be displayed inside the roadway.

When the information obtained at step S103 is to be displayed inside the roadway (step S104: Yes), the process goes to step S105. At step S105, the rendering process unit 4b generates such an image (graphic) that the display range of the information obtained at step S103 is inside the roadway. In this case, in order to realize the above-mentioned AR display, the rendering process unit 4b calculates the display position (first display position) of the information based on the positional relationship (e.g., relationship with respect to the latitude and the longitude or the bearing) between the position of the object corresponding to the information to be displayed and the own position, and thereafter displays the image corresponding to the information at the first display position. Then, the process goes to step S110.

In contrast, when the information obtained at step S103 is not to be displayed inside the roadway (step S104: No), i.e., it is to be displayed outside the roadway, the process goes to step S106. Hereinafter, a description will be given of the process at the time when the information to be displayed outside the roadway is POI information, for example.

At step S106, the rendering process unit 4b calculates the position of the POI in the captured image. Concretely, the rendering process unit 4b calculates the display position (first display position) of the POI based on the positional relationship (e.g., relationship with respect to the latitude and the longitude or the bearing) between the position of the facility corresponding to the POI and the own position, and thereafter calculates the position corresponding to the first display position in the captured image. Then, the process goes to step S107.

At step S107, the rendering process unit 4b determines whether or not to draw the POI information into the outside of the roadway, i.e., whether or not to perform the outside roadway drawing process. In this case, the rendering process unit 4b makes a determination at step S107 by determining whether or not the position of the POI in the captured image calculated at step S106 is within the range corresponding to the inside of the roadway distinguished in the captured image at step S102.

When the rendering process unit 4b draws the POI information into the outside of the roadway (step S107: Yes), i.e., the position of the POI in the captured image is inside the roadway, the process goes to step S108. At step S108, the rendering process unit 4b performs the outside roadway drawing process for changing the display position of the POI information to the outward direction of the roadway. Concretely, by performing any one of the above-mentioned first to third processes as illustrated in FIGS. 6A to 6C, the rendering process unit 4b calculates the second display position that is an outside position of the roadway shifted from the first display position. Then, the process goes to step S109.

When the POI information is not drawn into the outside of the roadway (step S107: No), i.e., when the position of the POI in the captured image is not inside the roadway, the process goes to step S109. Inthiscase, the outside roadway drawingprocess executed at step S108 is not performed.

At step S109, the rendering process unit 4b generates such an image (graphic) that the information obtained at step S103 is displayed outside the roadway. Concretely, as for the POI information whose display position is not inside the roadway, on the basis of the positional relationship (e.g., relationship with respect to the latitude and the longitude or the bearing) between the own position and the position of the facility corresponding to the POI information, the rendering process unit 4b calculates the displayposition (first displayposition) of the POI information thereby to display the image corresponding to the POI information at the first display position. In contrast, as for the POI information whose display position is inside the roadway, the rendering process unit 4b displays the image corresponding to the POI information at the second display position calculated at step S108. Then, the process goes to step S110.

At step S110, the rendering process unit 4b determines whether or not the process for all information to be displayed has finished. Namely, the rendering process unit 4b determines whether or not the process for each piece of information to be displayed which is obtained at step S103 has finished. When the process for all information to be displayed has finished (step S110: Yes), the rendering process unit 4b generates final images for display and stores the images on the frame memory 4e (step S111). Then, the images stored on the frame memory 4e are supplied to the display output unit 4f and the display output unit 4f outputs the images stored on the frame memory 4e to the display unit (step S112). Thereafter, the process ends. In contrast, when the process for all information to be displayed has not finished yet (step S110: No), the process goes to step S104. In this case, the process at and after step S104 is repeatedly executed.

### [Effect of Embodiment]

As described above, according to the embodiment, in case of the AR display, the information is displayed either inside the roadway or outside the roadway depending on the category of the information to be displayed. The information is categorized into information to be displayed inside the roadway and information to be displayed outside the roadway. Thereby, it is possible to properly arrange display information in the display range of the head-up display 2 and to let the driver easily recognize the category of the displayed information. It is noted that the display range of the head-up display 2 tends to be narrower than the display range of a typical navigation device . According to the embodiment, it is also possible to display the information, which is inappropriate for displaying inside the roadway, at an outside position of the roadway, and therefore misunderstandings to the driver can be suppressed.

According to the embodiment, it is also possible to display information in accordance with the priority depending on whether the display position is inside the roadway or outside the roadway. For example, when the amount of information to be displayed has increased at a certain traveling position, it is possible to restrict the display of the information according to the priority. For example, as for the information to be displayed inside the roadway, it is preferentially displayed since it is directly relevant to the driving operation. In contrast, as for the information to be displayed outside the roadway, the display is restricted since the information is secondary information.

Additionally, according to the embodiment, when the information to be displayed outside the roadway is estimated to be displayed inside the roadway, the information is displayed at the second display position that is a position shifted from the first display position by the outside roadway drawing process, instead of the first display position calculated based on the positional relationship with respect to the own position. Thereby, it is possible to effectively suppress the POI information from being displayed inside the roadway and enhance the display accuracy of the AR display.

### [Modification]

Hereinafter, preferred modifications of the above-mentioned embodiment will be described below. Each modification mentioned later can be applied to the above-mentioned embodiment in combination.

### (First Modification)

According to the above-mentioned embodiment, any one of the first process to the third process is executed as the outside roadway drawing process, however the approach to which the present invention can be applied is not limited to the approach. In another example, after all the first process to the third process are executed, the most suitable display position may be adopted out of the second display positions calculated through the first process to the third process. Concretely, the most nearest position to the actual position (i.e., the position of the facility in the captured image) of the facility corresponding to the POI can be adopted out of the second display positions calculated through the first process to the third process. Thereby, it is possible to further enhance the display accuracy of the AR display.

### (Second Modification)

According to the above-mentioned embodiment, all the information categorized into the information to be displayed outside the roadway according to the display category information is displayed outside the roadway. Instead, in a case that the facility corresponding to the information exists inside the roadway, the information may be displayed inside the roadway even if the information is categorized into the information to be displayed outside the roadway. For example, if the information cannot be displayed at any position other than the inside of the roadway due to the degree of the curve of the road in the travelling direction, the information may be displayed inside the roadway in order to prioritize the display of the information.

### (Third Modification)

According to the above-mentioned embodiment, the outside roadway drawing process is performed in the case that the information to be displayed outside the roadway is estimated to be displayed inside the roadway. Instead, in a case that a small fraction of the information to be displayed outside the roadway is inside the roadway, the outside roadway drawing process may not be executed. Concretely, in a case that the first display position of the information to be displayed outside the roadway is inside the roadway, if the distance between the first display position and the roadway line is shorter than a predetermined value, the information may be displayed at the first display position without executing the outside roadway drawing process.

### (Fourth Modification)

Instead of the above-mentioned example that the combiner 9 is used as the transparent member according to the above-mentioned embodiment, the front window may be used as the transparent member in place of the combiner 9. The light source unit 3 may be provided inside the dashboard 29 instead of the ceiling board 27 whereas the light source unit 3 is provided on the ceiling board 27 in the embodiment.

### (Fifth Modification)

According to the above-mentioned embodiment, the present invention is applied to the system including the navigation device 1 and the head-up display 2 in which the camera 6 is incorporated, but the configuration to which the present invention can be applied is not limited to the configuration. Instead, the present invention can be applied to a device in which the navigation device, the head-up display and the camera are integrally configured. The present invention can be also applied to a system in which the navigation device, the head-up display and the camera are configured separately. The present invention can be also applied to a system including a head-up display and a navigation device in which the camera is incorporated.

### (sixth Modification)

Instead of the above-mentioned example that the display control is performed based on the captured image captured by the camera 6 according to the embodiment, the display control may be performed without using the captured image. Namely, the present invention can be also applied to a system or a device which does not have the camera 6. Concretely, in an alternative example, firstly it distinguishes between the range corresponding to the inside of the roadway and the range corresponding to the outside of the roadway in the display range of the head-up display 2 on the basis of information on the number of the lane and information on the width of a typical road, and thereafter performs the same control as the above-mentioned display control based on the distinguished ranges of the inside and the outside of the roadway.

### (Seventh Modification)

The present invention can be also applied to a device which superimposes, on an actual image obtained by a camera capturing the scenery in the traveling direction of the vehicle, information on an object existing in the actual image . For example, the present invention can be applied to a smart phone which guides the user by the AR display using an actual image captured by the incorporated camera. Even if the present invention is applied to such a device, the above-mentioned outside roadway drawing process is performed in the same way at the time when the display position of the information on the object in accordance with the own position is inside the roadway of the road in the actual image.

### (Eighth Modification)

The present invention can be applied not only to the head-up display 2 but also to a navigation device using a transparent display and a transparent head mounted display.

### INDUSTRIAL APPLICABILITY

Preferably, this invention can be applied to a head-up display and a navigation device (including a cell phone such as a smart phone).

### BRIEF DESCRIPTION OF REFERENCE NUMBERS

- 1: Navigation device
- 2: Head-up display
- 3: Light source unit
- 4: Control unit
- 4a: Roadway inside/outside distinction unit
- 4b: Rendering process unit
- 4c: Display category information database
- 6: Camera
- 9: Combiner

## Claims

1. A display device (2) comprising:
a position information obtaining unit (4b) configured to obtain position information of a moving body; and
a display control unit (4) configured to display information on an object by superposing the information on scenery in front of the moving body or on an actual image of the scenery based on the position information, the object being contained in the scenery,
the device being **characterised in that** the display control unit (4) changes a display position of the information on the object to an outward direction of a road (71) in a case that the display position of the information on the object based on the position information is inside the road (71), the road being contained in the scenery.

2. The display device (2) according to claim 1,
wherein the display control unit (4) displays the information through a transparent member (9) positioned between a viewpoint of a traveler in the moving body and the scenery, and
wherein the display control unit (4) changes the display position of the information to the outward direction in a case that the display position of the information is inside the road (71) contained in the scenery seen through the transparent member (9) .

3. The display device (2) according to claim 1,
wherein the display control unit (4) changes the display position of the information to the outward direction in a case that the display position of the information is inside the road (71) contained in the actual image of the scenery.

4. The display device (2) according to any one of claim 1 to 3, further comprising
an object information obtaining unit (4) configured to obtain category information on a category of the object,
wherein the display control unit (4) determines whether or not to change the display position of the information on the object based on the category information.

5. The display device (2) according to claim 4,
wherein the display control unit (4) decides to change the display position of the information on the object to the outward direction of the road (71) in a case that the category of the object according to the category information is relevant to a facility, and decides not to change the display position of the information on the object to the outward direction of the road (71) in a case that the category of the object according to the category information is relevant to a road sign.

6. The display device (2) according to any one of claim 1 to 5,
wherein the display control unit (4) changes the display position of the information on the object to the outward direction of the road (71) in a case that the object is a facility existing outside the road (71), and does not change the display position of the information on the object to the outward direction of the road in a case that the object is a facility existing inside the road (71).

7. A display method executed by a display device (2), comprising:
a position information obtaining process for obtaining position information of a moving body; and
a display control process for displaying information on an object by superposing the information on scenery in front of the moving body or on an actual image of the scenery based on the position information, the object being contained in the scenery,
wherein in the display control process, a display position of the information on the object is changed to an outward direction of a road (71) in a case that the display position of the information on the object based on the present position information is inside the road (71), the road (71) being contained in the scenery.

## Patentansprüche

1. Anzeigevorrichtung (2), Folgendes umfassend:
eine Positionsinformationserhaltungseinheit (4b), die konfiguriert ist, um Positionsinformationen eines sich bewegenden Körpers zu erhalten; und
eine Anzeigesteuereinheit (4), die konfiguriert ist, um Informationen über ein Objekt anzuzeigen, indem die Informationen über eine Landschaft vor dem sich bewegenden Körper oder über eine tatsächliche Abbildung der Landschaft auf Grundlage der Positionsinformationen überlagert werden, wobei das Objekt in der Landschaft enthalten ist,
wobei die Vorrichtung **dadurch gekennzeichnet ist, dass** die Anzeigesteuereinheit (4) eine Anzeigeposition der Informationen über das Objekt zu einer äußeren Richtung einer Straße (71) ändert, in einem Fall, dass die Anzeigeposition der Informationen über das Objekt auf Grundlage der Positionsinformationen innerhalb der Straße (71) ist, wobei die Straße in der Landschaft enthalten ist.

2. Anzeigevorrichtung (2) nach Anspruch 1,
wobei die Anzeigesteuereinheit (4) die Informationen durch ein transparentes Element (9) anzeigt, das zwischen einem Sichtpunkt eines Reisenden in dem sich bewegenden Körper und der Landschaft positioniert ist, und
wobei die Anzeigesteuereinheit (4) die Anzeigeposition der Informationen zu der äußeren Richtung ändert, in einem Fall, dass die Anzeigeposition der Informationen innerhalb der Straße (71) ist, die in der Landschaft, die durch das transparente Element (9) gesehen wird, enthalten ist.

3. Anzeigevorrichtung (2) nach Anspruch 1,
wobei die Anzeigesteuereinheit (4) die Anzeigeposition der Informationen zu der äußeren Richtung ändert, in einem Fall, dass die Anzeigeposition der Informationen innerhalb der Straße (71) ist, die in der tatsächlichen Abbildung der Landschaft enthalten ist.

4. Anzeigevorrichtung (2) nach einem der Ansprüche 1 bis 3, ferner umfassend:
eine Objektinformationserhaltungseinheit (4), die konfiguriert ist, um Kategorieinformationen über eine Kategorie des Objekts zu erhalten,
wobei die Anzeigesteuereinheit (4) bestimmt, ob die Anzeigeposition der Informationen über das Objekt auf Grundlage der Kategorieinformationen geändert werden soll oder nicht.

5. Anzeigevorrichtung (2) nach Anspruch 4,
wobei die Anzeigesteuereinheit (4) sich entscheidet, die Anzeigeposition der Informationen über das Objekt zu der äußeren Richtung der Straße (71) zu ändern, in einem Fall, dass die Kategorie des Objekts gemäß der Kategorieinformationen im Zusammenhang mit einer Einrichtung steht, und sich entscheidet, die Anzeigeposition der Informationen über das Objekt nicht zu der äußeren Richtung der Straße (71) zu ändern, in einem Fall, dass die Kategorie des Objekts gemäß der Kategorieinformationen im Zusammenhang mit einem Straßenschild steht.

6. Anzeigevorrichtung (2) nach einem der Ansprüche 1 bis 5,
wobei die Anzeigesteuereinheit (4) die Anzeigeposition der Informationen über das Objekt zu der äußeren Richtung der Straße (71) ändert, in einem Fall, dass das Objekt eine außerhalb der Straße (71) vorhandene Einrichtung ist, und die Anzeigeposition der Informationen über das Objekt nicht zu der äußeren Richtung der Straße ändert, in einem Fall, dass das Objekt eine innerhalb der Straße (71) vorhandene Einrichtung ist.

7. Anzeigeverfahren, das durch eine Anzeigevorrichtung (2) ausgeführt wird, Folgendes umfassend:
einen Positionsinformationserhaltungsvorgang zum Erhalten von Positionsinformationen eines sich bewegenden Körpers; und
einen Anzeigesteuerungsvorgang zum Anzeigen von Informationen über ein Objekt durch Überlagern der Informationen über Landschaft vor dem sich bewegenden Körper oder über eine tatsächliche Abbildung der Landschaft auf Grundlage der Positionsinformationen, wobei das Objekt in der Landschaft enthalten ist,
wobei eine Anzeigeposition der Informationen über das Objekt in dem Anzeigesteuerungsvorgang zu einer äußeren Richtung einer Straße (71) geändert wird, in einem Fall, dass die Anzeigeposition der Informationen über das Objekt auf Grundlage der vorliegenden Positionsinformationen innerhalb der Straße (71) ist, wobei die Straße (71) in der Landschaft enthalten ist.

## Revendications

1. Dispositif d'affichage (2) comprenant :
une unité d'obtention d'informations de position (4b), configurée pour obtenir des informations de position d'un corps en mouvement ; et
une unité de commande d'affichage (4) configurée pour afficher des informations relatives à un objet par superposition des informations relatives à un paysage situé devant le corps en mouvement ou à une image réelle du paysage en fonction des informations de position, l'objet étant contenu dans le paysage,
le dispositif étant **caractérisé en ce que** l'unité de commande d'affichage (4) modifie une position d'affichage des informations relatives à l'objet par rapport à une direction de sortie d'une route (71) dans le cas où la position d'affichage des informations relatives à l'objet est basée sur les informations de position est située à l'intérieur de la route (71), la route étant contenue dans le paysage.

2. Dispositif d'affichage (2) selon la revendication 1,
l'unité de commande d'affichage (4) affichant les informations par le biais d'un élément transparent (9) positionné entre le point de vue d'un voyageur dans le corps en mouvement et le paysage, et
l'unité de commande d'affichage (4) modifiant la position d'affichage des informations par rapport à la direction de sortie dans le cas où la position d'affichage des informations est située à l'intérieur de la route (71) contenue dans le paysage vu à travers l'élément transparent (9).

3. Dispositif d'affichage (2) selon la revendication 1,
l'unité de commande d'affichage (4) modifiant la position d'affichage des informations par rapport à la direction de sortie dans le cas où la position d'affichage des informations est située à l'intérieur de la route (71) contenue dans l'image réelle du paysage.

4. Dispositif d'affichage (2) selon l'une quelconque des revendications 1 à 3, comprenant en outre
une unité d'obtention d'informations d'objet (4) configurée pour obtenir des informations de catégorie relatives à une catégorie de l'objet,
l'unité de commande d'affichage (4) déterminant s'il est nécessaire ou non de changer la position d'affichage des informations relatives à l'objet en fonction des informations de catégorie.

5. Dispositif d'affichage (2) selon la revendication 4,
l'unité de commande d'affichage (4) décidant de changer la position d'affichage des informations relatives à l'objet par rapport à la direction de sortie de la route (71) dans le cas où la catégorie de l'objet fonction des informations de catégorie est pertinente pour un équipement et décidant de ne pas modifier la position d'affichage des informations relatives à l'objet par rapport à la direction de sortie de la route (71) dans le cas où la catégorie de l'objet fonction des informations de catégorie est pertinente pour un panneau de signalisation.

6. Dispositif d'affichage (2) selon l'une quelconque des revendications 1 à 5,
l'unité de commande d'affichage (4) modifiant la position d'affichage des informations relatives à l'objet par rapport à la direction de sortie de la route (71) dans le cas où l'objet est un équipement existant à l'extérieur de la route (71), et ne modifiant pas la position d'affichage des informations relatives à l'objet par rapport à la direction de sortie de la route dans le cas où l'objet est un équipement existant à l'intérieur de la route (71).

7. Procédé d'affichage exécuté par un dispositif d'affichage (2), comprenant :
un processus d'obtention d'informations de position, destiné à obtenir des informations de position d'un corps en mouvement ; et
un processus de commande d'affichage, destiné à afficher des informations relatives à un objet par superposition des informations relatives à un paysage situé devant le corps en mouvement ou à une image réelle du paysage en fonction des informations de position, l'objet étant contenu dans le paysage,
dans le processus de commande d'affichage, une position d'affichage des informations relatives à l'objet étant modifiée par rapport à la direction de sortie d'une route (71) dans le cas où la position d'affichage des informations relatives à l'objet en fonction des informations de position actuelle est située à l'intérieur de la route (71), la route (71) étant contenue dans le paysage.
